# EUROPÄISCHE PATENTANMELDUNG

(11) **EP 0 601 409 A1**
(43) Veröffentlichungstag der Anmeldung: **15.06.1994**
(21) Anmeldenummer: 93119040.9
(22) Anmeldetag: 25.11.1993
(51) Int. Cl.: B62J 15/02, F16B 2/24

(54) **Befestigungsvorrichtung für ein Schutzblech**

(30) Priorität: 09.12.1992 DE 4241371
(71) Anmelder: sks-metaplast SCHEFFER-KLUTE GMBH, D-59846 Sundern/Sauerland (DE)
(72) Erfinder: Kellner, Willi, D-32052 Herford (DE); Gräper, Hans-Joachim, D-32049 Herford (DE)
(74) Vertreter: Rehberg, Elmar, Dipl.-Ing.

(57) **Zusammenfassung**

Eine Befestigungsvorrichtung für ein Schutzblech, insbesondere an einem Fahrrad, weist eine Klemmeinrichtung für eine zum Schutzblech 1 führende Drahtstrebe 2 pro Fahrradseite auf, die die Drahtstrebe 2 nur reibschlüssig festlegt. Die Klemmeinrichtung 7, 12, 14 ist federnd-nachgiegig ausgebildet oder weist mindestens ein federn-nachgiegiges Teil auf, durch dessen oder deren Federkraft eine definierte Kraftschwelle des Reibschlusses zwischen Klemmeinrichtung und Drahtstrebe 2 festgelegt ist, die die Justage während des Montagevorganges und das selbsttätige Öffnen der reibschlüssigen Verbindung bei drohender Blockade des Rades ermöglicht.

## Beschreibung

Die Erfindung bezieht sich auf eine Befestigungsvorrichtung für ein Schutzblech, insbesondere an einem Fahrrad, mit mindestens einer zum Schutzblech führenden Drahtstrebe pro Fahrradseite und einer schutzblechseitig oder gabelseitig vorgesehenen Klemmeinrichtung, die die Drahtstrebe nur reibschlüssig festlegt. Unter einem Schutzblech wird ein in bekannter Weise gebogenes Formteil verstanden, unabhängig, aus welchem Material es besteht. Schutzbleche aus Metall, aber auch aus Kunststoff, sind bekannt; die Erfindung läßt sich insbesondere vorteilhaft bei Schutzblechen aus Kunststoff anwenden. Das Schutzblech dient allgemein dem teilweisen Abdecken des Umfangs eines Rades, beispielsweise an einem Fahrrad, einem Motorrad, einem Krankenfahrstuhl o. dgl..

Eine Befestigungsvorrichtung der eingangs beschriebenen Art ist bekannt. Sie dient zur Verbindung einer Drahtstrebe mit einem aus Kunststoff bestehenden Schutzblech. Dabei sind pro Fahrradseite zwei Drahtstreben vorgesehen. Das Schutzblech besitzt an jeder Befestigungsstelle eine untergenietete Befestigungsbrücke aus Metall, die zwei in Richtung auf die Radachse abstehende Schenkel aufweist. In jedem Schenkel befindet sich ein Loch, welches zur Aufnahme eines Befestigungsbolzens dient. Der Befestigungsbolzen besitzt einen Kopf, an den sich ein Schaft anschließt, der an seinem dem Kopf zugekehrten Ende von einer Querbohrung durchsetzt ist, durch die die Drahtstrebe hindurchgefädelt wird. An die Querbohrung schließt sich im Bereich des Schaftes ein Gewindeteil an, welches eine Klemmbuchse und eine dem Gewinde zugeordnete Mutter aufnimmt. Die Klemmeinrichtung weist somit den Befestigungsbolzen, die Klemmbuchse und die Mutter auf. Durch das Festziehen der Mutter werden die Teile gegeneinander geklemmt, wobei eine reibschlüssige Verbindung entsteht. Diese Klemmeinrichtung besitzt praktisch zwei Funktionsstellungen. Entweder ist die Mutter nicht angezogen, dann läßt sich die Drahtstrebe in der Querbohrung des Befestigungsbolzens lose verschieben, oder die Mutter ist festgezogen, dann läßt sich die Drahtstrebe relativ zum Querbolzen nicht verschieben. Das Anziehen der Mutter erfolgt derart und in der Absicht, daß ein fester Sitz der Klemmeinrichtung erreicht wird, also eine Verschiebung zwischen Befestigungsbolzen und Drahtstrebe nicht möglich ist.

Diese bekannte Befestigungsvorrichtung hat zwei wesentliche Nachteile. Bei der Montage des Fahrrades beim Fahrradhersteller oder in der Fahrradreparaturwerkstatt muß das Schutzblech symmetrisch zur Ebene des Rades und in gleichem Abstand zur Radachse montiert bzw. justiert werden. Hierbei müssen zwei Befestigungspunkte pro Fahrradseite, also insgesamt vier Befestigungspunkte relativ zueinander festgezogen werden. Die aus Kunststoff bestehenden Schutzbleche besitzen eine relativ niedrige Formstabilität und lassen sich durch die Einstellung und Justage an den vier Befestigungspunkten ordnungsgemäß montieren, wobei diese Montage allerdings eine beträchtliche Erfahrung und Geschicklichkeit erfordert. Wenn sich die vier Befestigungspunkte in ihrer losen Stellung befinden, wenn also alle vier Muttern nicht festgezogen sind, ist es möglich, das Schutzblech bezüglich der Radebene und er Radachse auszurichten und eine Mutter nach der anderen festzuziehen. Dabei besteht jedoch bereits die Gefahr, daß die eine oder andere Drahtstrebe während des Festziehens der ersten Mutter aus ihrer Querbohrung am Befestigungsbolzen herausrutscht oder sich zumindest in eine solche ungewollte Lage verschiebt, die die weitere Justage behindert. Auch besteht die Gefahr, daß trotz bester Absicht das Festziehen der ersten Mutter an den vier Befestigungspunkten nicht die endgültige Befestigungsstellung darstellt, so daß es erforderlich ist, während der Justage und des Anziehens der Mutter die eine oder andere Mutter wieder zu lösen, nachzujustieren und erneut festzuziehen. Dem könnte man nur dadurch begegnen, daß sämtlich vier Muttern gleichzeitig festgezogen werden, was aber aus praktischen Gründen ausscheidet.

Zur Befestigung von Drahtstreben bei Schutzblechen aus Metall sind weiterhin sog. Strebenbolzen bekannt, bei denen die Durchbrechung in Langlochform nach Art einer Querbohrung in einem zylinderartigen Kopf vorgesehen ist. Auch ein solcher Strebenbolzen besitzt einen mit Gewinde versehenen Schaft, eine Klemmhülse und eine Mutter, so daß beim Anziehen der Mutter die Teile miteinander verklemmt werden. Auch diese Befestigungsvorrichtung arbeitet mit Reibschluß, wobei auch hier die Klemmeinrichtung praktisch nur zwei Funktionsstellungen zuläßt. Entweder ist die Mutter nicht angezogen, dann liegt auch kein Reibschluß vor. Andererseits wird die Mutter solange angezogen, bis eine feste unverrückbare Verbindung erreicht ist. Ein solcher Strebenbolzen kann auch in Verbindung mit einer Überlaufstrebe eingesetzt werden, wobei sein Schaftteil durch eine Durchbrechung im Schutzblech gesteckt wird. Dabei besteht der zusätzliche Nachteil, daß das Schutzblech bei Beanspruchung an dieser Stelle ausbricht.

In der Zeitschrift "Radfahren" 4/92, Seite 66 ff, wird unter der Überschrift "Fly, biker, fly!" von Unfällen berichtet, die bei den bekannten Befestigungsvorrichtungen für Schutzbleche eintreten können und bei denen der Radfahrer mittels einer mehr oder weniger eleganten Flugrolle über den Lenker "abgestiegen" ist. Ursache für diesen Unfall war ein Kieselstein, der sich zwischen der Lauffläche des Reifens und dem unteren Ende des Schutzbleches des Vorderrades eingeklemmt hat. Da die Muttern an den Klemmvorrichtungen bei der Montage und Justage so fest angezogen werden, daß der Reibschluß nicht gelöst werden kann, entstehen bei einer solchen Situation beachtliche Kippmomente, die dann zu einer Flugrolle für den Fahrradfahrer führen können. Eine ähnliche Situation ergibt sich für den Fahrradfahrer dann, wenn z. B. ein Stöckchen zwischen die Speichen des Rades gelangt und mit nach oben gefördert wird, wobei es sich dann quer zu den Drahtstreben aufbaut und zu einer plötzlichen Blockade des Drehens des Rades führt. Dabei werden die Drahtstreben eingeknickt und das Schutzblech auf die Reifenlauffläche herabgezogen, wodurch ein ähnlicher Bremseffekt zustande kommt. Wenn das Schutzblech dann aus der Befestigungseinrichtung ausreißt, kann es weiterhin vorkommen, daß es sich mäanderförmig unter der Gabel zusammenfaltet und auch hier als blockierende Bremse wirkt.

Um diesen Unfällen vorzubeugen, wird vorgeschlagen, die Drahtstrebe zu zersägen, also zweiteilig auszubilden, und die beiden einander zugekehrten Enden in einem Gummischlauch oder einer Kunststoffhülse festzulegen. Damit besteht zwar Reibschluß zwischen den Teilen, und eine solche Klemmvorrichtung läßt sich auch lösen, so daß die Unfallgefahr weitgehend beseitigt ist. Nachteilig hieran ist jedoch, daß eine solche Befestigungsvorrichtung auch eine unsachgemäße Montage ermöglicht, indem die vorgesehene Relativlage zwischen Kunststoffhülse und den Enden der Drahtstrebe nicht erreicht wird. Je nach dem, wie tief das Ende der Drahtstrebe in diese Kunststoffhülse eingesteckt wird, ergeben sich unterschiedlich große Reibflächen und damit unterschiedlich große Kraftschwellen, die beim Öffnen der Befestigungsvorrichtung überwunden werden müssen. Bei der Justage des Schutzbleches ist eine solche Befestigungsvorrichtung nur bedingt brauchbar. Wenn das Schutzblech eine solche Spannung aufweist, daß die Drahtstrebe allein oder infolge beim Fahren einwirkender Erschütterungen aus der Kunststoffhülse heraustritt, dann verliert eine solche Befestigungseinrichtung ihren Sinn.

Auch verändert sich der Reibschluß infolge Alterns der Kunststoffhülse. Schließlich kann eine Verschmutzung nachteilige Auswirkungen haben. Wenn überhaupt, dann ist eine solche Befestigungseinrichtung in ihrer geometrischen Abmessung auch nur auf eine einzige Radgröße und Einbausituation festgelegt. Ein Schutzblech läßt sich mit den gleichen Teilen nicht an unterschiedlich großen Rädern justieren.

Der Erfindung liegt die Aufgabe zugrunde, eine Befestigungsvorrichtung der eingangs beschriebenen Art bereitzustellen, die einerseits eine einfache Justage des Schutzbleches relativ zur Radebene und zur Radachse gestattet, auch bei unterschiedlichen Radgrößen, und die andererseits zur Vermeidung von Unfällen der beschriebenen Art zu einem Lösen der Befestigungseinrichtung führt.

Erfindungsgemäß wird dies bei der Befestigungsvorrichtung der eingangs beschriebenen Art dadurch erreicht, daß die Klemmeinrichtung federnd-nachgiebig ausgebildet ist oder mindestens ein federnd-nachgiebiges Teil aufweist, durch deren oder dessen Federkraft eine definierte Kraftschwelle des Reibschlusses zwischen Klemmeinrichtung und Drahtstrebe festgelegt ist, die die Justage während des Montagevorgangs und das selbsttätige Öffnen der reibschlüssigen Verbindung bei drohender Blockade des Rades ermöglicht.

Die Erfindung geht von dem Gedanken aus, mit der Klemmeinrichtung eine definierte, also auf einen bestimmten Wert festgelegte Kraftschwelle des Reibschlusses zwischen Klemmeinrichtung und Drahtstrebe zur Verfügung zu stellen, die einerseits niedrig genug ist, um eine einfache Justage des Schutzbleches zur Radebene und zur Radachse zu gestatten, wobei es darauf ankommt, daß diese definierte Kraftschwelle auch hoch genug ist, um beim Justieren eines Befestigungspunkte die anderen Befestigungspunkte nicht zu beeinflussen. Andererseits muß die Kraftschwelle aber so hoch gewählt werden, daß sie bei normalem Gebrauch des Fahrrades ein selbsttätiges Verstellen des Schutzbleches verhindert, und bei drohender Blockade des Rades muß die Überwindung der Kraftschwelle dazu führen, daß sich die Befestigungsvorrichtung löst und das Schutzblech freigibt, damit es sich vom Umfang des Rades entfernen kann. Eine feste Verbindung mit Hilfe der bekannten Strebenbolzen, die bisher immer angestrebt wurde, wird bewußt verlassen. Die definierte Kraftschwelle wird bei der Justage nicht verändert, d. h. der vorgesehene Wert der Kraftschwelle bleibt trotz Justage erhalten. Hierzu werden in ihrer Größe festgelegte Reibflächen zur Verfügung gestellt, die ihre Größe bei der Justage nicht verändern.

Besonders vorteilhaft ist es, wenn die Klemmeinrichtung zwei unterschiedliche definierte Kraftschwellen aufweist, von denen die niedrigere der Justage und die höhere dem selbsttätigen Öffnen zugeordnet ist. In diesem Falle braucht kein Mittelwert gewählt zu werden, sondern die jeweilige Kraftschwelle kann entsprechend der gewünschten Funktion optimal abgestimmt werden. Für die Justage wird man eine vergleichsweise niedrige Kraftschwelle wählen, die das leichte Verschieben der Drahtstrebe relativ zur Klemmeinrichtung gestattet, wobei jedoch diese erste Kraftschwelle so groß sein muß, daß die Justage anderer Befestigungspunkte nicht zu einer Mitverstellung des zuerst eingestellten Befestigungspunktes führt. Die höhere Kraftschwelle, die zum Lösen der reibschlüssigen Verbindung bei drohender Blockade des Rades gehört, kann entsprechend höher gewählt werden, um den Öffnungsvorgang nur bei tatsächlich drohender Blockade auszulösen und andererseits für den normalen Betrieb des Fahrrades einen quasi-festen unverrückbaren Sitz des Schutzbleches relativ zum Rade zu garantieren. Es versteht sich, daß auch diese höhere Kraftschwelle immernoch niedriger ist als die feste Verbindung, wie sie für Strebenbolzen typisch ist.

In einer bevorzugten Ausführungsform kann die Klemmeinrichtung einen schräg zur Achse der Drahtstrebe verlaufenden federnden Schenkel aufweisen, der eine Durchbrechung besitzt, durch die sich die Drahtstrebe erstreckt. Dies ist eine sehr einfache Möglichkeit, eine oder auch zwei reproduzierbare Kraftschwellen zu realisieren, die unabhängig von einer Alterung und einer Verschmutzung sind. Auch die im Reibschluß zueinander befindlichen Flächen sind dabei immer gleich groß. Durch die Geometrie der Einzelteile der Klemmeinrichtung wird die Kraftschwelle festgelegt. Durch die Verwendung eines federnden Schenkels, der von der Drahtstrebe durchsetzt wird, entsteht der besondere Vorteil, daß die Befestigungseinrichtung, auch in ihrer konstruktiven Ausbildung, wahlweise für mehrere Radgrößen benutzbar ist, ohne daß längere oder kürzere Drahtstreben eingesetzt werden müßten. Die Drahtstreben können in einem Bereich seitlich des Schutzbleches angeordnet sein, wo sie nicht störend in Erscheinung treten. Ein solcher schräg zur Achse der Drahtstrebe - etwa in einem Winkel von etwa 75° - angeordneter federnder Schenkel besitzt in seinen beiden möglichen Verschieberichtungen unterschiedliche Eigenschaften. Dies führt dazu, daß die Leichtgängigkeit der Justage von der Verschieberichtung abhängig ist. Insoweit wird man die Schräganordnung des Schenkels so wählen, wie es für das selbsttätige Öffnen der Klemmeinrichtung bei drohender Blockade des Rades sinnvoll ist.

Diese unterschiedlichen Eigenschaften - je nach Verschieberichtung - lassen sich dadurch vermeiden, daß die Klemmeinrichtung zwei schräg zur Achse der Drahtstrebe verlaufende federnde Schenkel aufweist, die symmetrisch zu einer senkrecht auf der Achse der Drahtstrebe stehenden Ebene angeordnet sind und je eine Durchbrechung besitzen, durch die sich die Drahtstrebe erstreckt. Diese symmetrische Ausbildung ist auch insofern vorteilhaft, als sich damit die definierte Kraftschwelle oder die definierten beiden Kraftschwellen konstruktiv leichter erreichen und verwirkliche lassen als bei Verwendung nur eines federnden Schenkels.

Es kann ein Stellglied zum wahlweisen der einen oder der anderen Kraftschwelle vorgesehen sein. Damit ist es möglich, während der Montage die vergleichsweise niedrige Kraftschwelle einzustellen, damit die Montage einfach und leicht vonstatten gehen kann. Nach beendeter Montage wird mit dem Stellglied die höhere Kraftschwelle eingestellt, wie es für den korrekten Sitz des Schutzbleches relativ zur Radebene und zur Radachse sinnvoll ist. Die federnden Schenkel können an ihren freien Enden Fortsätze aufweisen, an denen das Stellglied angreift. Das Stellglied dient dann zur Veränderung der Federkraft bzw. der Vorspannung der federn-nachgiebigen Klemmeinrichtung zur Realisierung der beiden Kraftschwellen. Das Stellglied kann aber auch an anderer Stelle als an den Fortsätzen der Schenkel angreifen.

Das Stellglied kann zugleich als Abdeckkappe für die Schenkel der Klemmeinrichtung ausgebildet sein, so daß es Gehäusefunktion erfüllt, wodurch neben der technischen Funktion auch ein formschönes Aussehen der Befestigungsvorrichtung erzielt wird. Gleichzeitig schützt die Abdeckkappe die Klemmeinrichtung vor Verschmutzung.

Das als Abdeckkappe ausgebildete Stellglied kann mit mindestens einer randgeschlossenen Ausnehmung versehen sein, durch die sich die Drahtstrebe erstreckt. Es können auch mehrere randgeschlossene Ausnehmungen vorgesehen sein. In allen Fällen wird damit die unverlierbare Anordnung der Abdeckkappe an der Befestigungseinrichtung erreicht. Wenn die Abdeckkappe gleichzeitig Stellglied ist, muß sie gegenüber anderen Teilen der Klemmeinrichtung zumindest begrenzt beweglich, beispielsweise schwenkbar sein, um das Einstellen der beiden Kraftschwellen zu ermöglichen. Wenn auf eine unverlierbare Anordnung der Abdeckkappe verzichtet werden soll, finden randoffene Ausnehmungen Anwendung, mit deren Hilfe die Abdeckkappe nach beendeter Montage aufgesetzt wird. Dabei kann eine Rast-Schnappverbindung Anwendung finden, um die Abdeckkappe in ihrer aufgesetzten Lage festzuhalten.

Die Klemmeinrichtung wird mindestens einmal pro Fahrzeugseite an jedem Rad angewendet. Bei Verwendung von Schutzblechen aus Kunststoff sind zwei Befestigungspunkte pro Fahrradseite und pro Rad sinnvoll und geläufig. Dies gilt in erster Linie für schutzblechseitige Anordnung oder bei geteilter Drahtstrebe im Mittelbereich zwischen Gabel und Schutzblech. Die Befestigungseinrichtung läßt sich aber auch gabelseitig anordnen und nutzen, beispielsweise in Verbindung mit einer V-förmig gebogenen Drahtstrebe, wobei allerdings die beiden schutzblechseitig gebildeten Befestigungspunkte in Abhängigkeit zueinander justiert werden müssen.

Die Erfindung wird anhand bevorzugter Ausführungsbeispiele weiter erläutert und beschrieben. Es zeigen:
- Figur 1: einen Schnitt durch eine erste Ausführungsform der Befestigungseinrichtung, parallel zur Drahtstrebe,
- Figur 2: einen Schnitt durch eine Federkralle als wesentlicher Bestandteil der Klemmeinrichtung gemäß Figur 1,
- Figur 3: eine Draufsicht auf die Federkralle gemäß den Figuren 1 und 2,
- Figur 4: eine zugehörige Seitenansicht der Federkralle,
- Figur 5: eine Prinzipskizze zur Verdeutlichung der grundsätzlichen Ausbildung,
- Figur 6: einen Schnitt ähnlich Figur 1 bei einer weiteren Ausführungsform,
- Figur 7: eine perspektivische Darstellung einer weiteren Ausführungsform der Befestigungseinrichtung und
- Figur 8: eine perspektivische Darstellung der Befestigungsvorrichtung gemäß Figur 1.

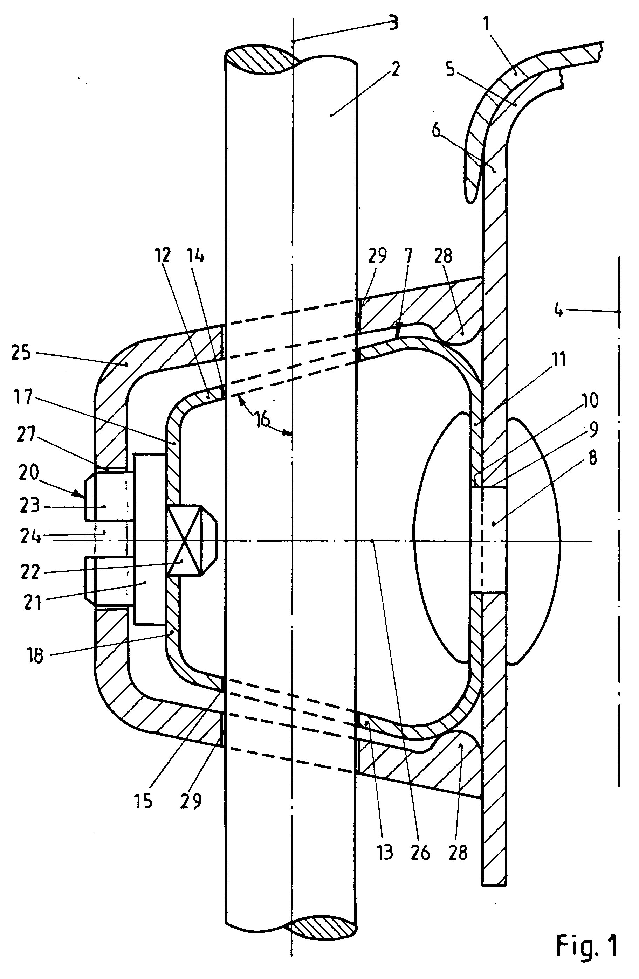

In Figur 1 sind die für das Verständnis der Erfindung wesentlichen Teile der Befestigungsvorrichtung in ihrer Relativanordnung am Fahrrad gezeigt. Es ist ein Schnitt durch ein Schutzblech 1 dargestellt, und zwar parallel zu einer Drahtstrebe 2 bzw. deren Achse 3. Es ist also hier das schutzblechseitige Ende dargestellt, wobei die Befestigungseinrichtung an diesem Befestigungspunkt Anwendung findet. Die zu dem Schutzblech 1 gehörige Radebene 4 ist durch eine strichpunktierte Linie angedeutet.

Mit dem Schutzblech 1 ist eine Befestigungsbrücke 5 verbunden, die als Metallformteil ausgebildet sein kann und in der Regel das Schutzblech 1 untergreift. Die Befestigungsbrücke 5 ist mit dem Schutzblech 1 fest verbunden, beispielsweise vernietet. Sie besitzt in symmetrischer Anordnung zu der Radebene 4 zwei Ohren 6, wobei in Figur 1 nur das auf der einen Fahrradseite angeordnete Ohr 6 dargestellt ist. Dieses erstreckt sich radial auf die Radachse zu. Mit dem Ohr ist als wesentlicher Bestandteil der Befestigungseinrichtung eine Federkralle 7 fest verbunden, beispielsweise mit Hilfe eines Niets 8, der eine Ausnehmung 9 im Ohr 6 und eine Ausnehmung 10 am Boden 11 der Federkralle 7 durchsetzt.

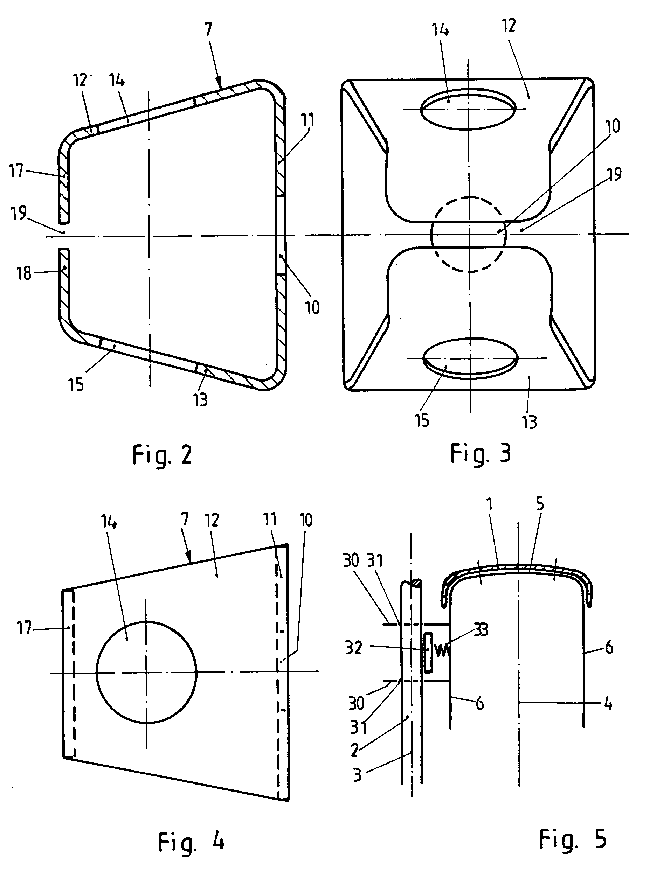

Die Federkralle 7 besitzt zwei schräg abstehende Schenkel 12, 13, die Durchbrechungen 14, 15 aufweisen, durch die die Drahtstrebe 2 hindurchgesteckt ist. Die Durchbrechungen 14 und 15 können als kreisrunde Löcher ausgebildet sein, deren Durchmesser etwas größer als der Durchmesser der Drahtstrebe 2 ausgebildet ist, wobei jedoch die Schräganordnung der Schenkel 12 und 13 hierauf abgestimmt ist. Die Schenkel 12 und 13 erstrecken sich mit ihren Hauptflächen schräg zur Zeichenebene durch die Achse 3. Sie verlaufen damit schräg zur Drahtstrebe 2. Der Schrägwinkel 16 kann beispielsweise 75°, wie dargestellt, betragen. Die Federkralle 7 ist aus federnd-nachgiebigem Material, beispielsweise aus Federstahl hergestellt. Die Schenkel 12 und 13 sind federnd ausgebildet und klemmen durch ihre Schräglage die Drahtstrebe 2 unter Reibschluß in den Durchbrechungen 14 und 15 fest. Die Schenkel 12 und 13 besitzen an ihren freien Enden Fortsätze 17 und 18, die aufeinander zugerichtet sind und im Abstand voneinander enden. Hierdurch wird ein Spalt 19 (Figur 3) geschaffen, in dessen Wirkbereich ein Stellglied 20 angeordnet ist. Das Stellglied 20 besitzt einen zylinderförmigen Bund 21, mit dem es auf dem Fortsätzen 17 und 18 aufgelagert ist. An den Bund 21 schließt sich ein Vierkant 22 mit rechteckigem Querschnitt an, der sich durch den Spalt 19 der Federkralle 7 hindurcherstreckt und in zumindest einer seiner beiden möglichen Relativstellungen an den freien Enden der Fortsätze 17 und 18 anliegt und diese und damit die Schenkel 12 und 13 etwas auseinanderspreizt. Zum Verdrehen in seine beiden um 90° verschiedenen Relativlagen besitzt das Stellglied 20 einen Kopf 23 mit Schlitz 24 zum Ansetzen eines Schraubenziehers. Selbstverständlich kann die Formgebung auch auf ein anderes Verdrehwerkzeug abgestimmt sein. Das Stellglied 20 ist als Metallformteil ausgebildet.

Zur Befestigungseinrichtung gehört schließlich noch eine Abdeckkappe 25, die beispielsweise als Kunststoffspritzteil ausgebildet sein kann. Die Abdeckkappe 25 ist ebenso wie die Federkralle 7 symmetrisch zu einer senkrecht auf der Achse 3 der Drahtstrebe 2 stehenden Ebene 26 ausgebildet und besitzt eine Ausnehmung 27 für den teilweisen Eintritt des Kopfes 23 des Stellgliedes 20. Da der Kopf 23 auch zylindrisch begrenzt ist, wird hierdurch das Stellglied 20 auch geführt. Die Abdeckkappe 25 besitzt Vorsprünge 28, die Übergangsbereiche zwischen den Schenkeln 12 und 13 der Federkralle 7 im Bereich des Bodens 11 hintergreifen, so daß hier eine Schnapp-Rastverbindung geschaffen ist. Die Abdeckkappe 25 liegt damit gleichzeitig dichtend an dem Ohr 6 der Befestigungsbrücke 5 an. Die Abdeckkappe 25 besitzt ansonsten zwei randgeschlossene Durchbrechungen 29, durch die die Drahtstrebe 2 mit Spiel hindurchgreift. Die Abdeckkappe 25 ist auf diese Weise unverlierbar gehalten und gegen unbefugte Abnahme vom Fahrrad gesichert.

Die Montage und Justage der Befestigungseinrichtung wird wie folgt durchgeführt. Die Federkralle 7 wird an dem Ohr 6 angenietet. Das Stellglied 20 wird mit seinem Vierkant 22 in den Spalt 19 eingesetzt und die Abdeckkappe 25 aufgeklipst. Durch ein Verdrehen des Stellgliedes 20 um etwa 45° wirkt die Diagonale des Vierkantes 22 auf die Schenkel 12 und 13 der Befestigungskralle 7 ein, wodurch diese so auseinandergespreizt werden, daß die Drahtstrebe 2 mühelos eingefädelt werden kann. Die Drahtstrebe 2 durchsetzt dabei die Durchbrechungen 14, 15 und 29. Die Drahtstrebe 2 kann zweckmäßig zu diesem Zeitpunkt gabelseitig bereits befestigt sein. Nach dem Durchtritt der Drahtstrebe 2 wird das Stellglied 20 um 45° in die in Figur 1 dargestellte Relativlage verdreht, wobei der Vierkant 22 ein Einfedern der Schenkel 12 und 13 in Richtung auf die Ebene 26 zu gestattet. Der Schrägwinkel 16 wird damit etwas kleiner, und die Drahtstrebe 2 wird in den Durchbrechungen 14 und 15 der Federkralle 7 reibschlüssig festgeklemmt, wobei eine erste relativ niedrige Kraftschwelle entsteht. Diese Kraftschwelle ist so bemessen, wie es für die Justage des Schutzbleches 1 zur Radebene 4 und zur Radachse sinnvoll ist. Dies bedeutet, daß einerseits das Schutzblech 1 mit der Federkralle 7 relativ zur Drahtstrebe 2 leicht verschoben werden kann, wobei die nach dem Verschieben erreichte Stellung durch die erste Kraftschwelle gesichert wird. Auf diese Weise werden sämtliche Befestigungspunkte bearbeitet. Bei der Montage eines Schutzbleches 1 aus Kunststoff sind in der Regel vier Befestigungspunkte, also zwei Befestigungspunkte auf jeder Radseite an jedem Rad vorgesehen. Während der Justage der anderen Befestigungspunkte verschiebt sich die Einstellung an dem zuvor eingestellten Befestigungspunkt nicht. Ist nach erfolgter Justage der ordnungsgemäße Sitz des Schutzbleches 1 zur Radebene 4 und zur Radachse erreicht, werden die Stellglieder 20 an jedem Befestigungspunkt um 90° gedreht. Dabei wird eine zweite Kraftschwelle eingestellt, die vergleichsweise höher liegt als die erste Kraftschwelle für die Justage. Die Ausbildung des Vierkantes 22 und der Schenkel 12 und 13 ist so getroffen, daß in dieser zweiten Stellung der Vierkant 22 von den Enden der Fortsätze 17 und 18 entweder völlig freikommt oder jedenfalls ein weiteres Nachfedern der Schenkel 12 und 13 in Richtung auf die Ebene 26 gestattet. Diese zweite Kraftschwelle, bei der die Drahtstrebe 2 mit den Schenkeln 12 und 13 der Federkralle 7 vergleichsweise mehr eingeklemmt wird, stellt ebenfalls eine nur reibschlüssige Verbindung dar und dient dazu, das Schutzblech 1 während des normalen Betriebes des Fahrrades in der eingestellten Stellung zu halten. Dies bedeutet, daß die zweite Kraftschwelle so hoch gewählt sein muß, daß Erschütterungen und Vibrationen des Fahrrades, wie sie beim normalen Betrieb entstehen, nicht zu einem Verändern der justierten Relativlage der Befestigungseinrichtung führen können. Wenn allerdings ein Unfall droht, sich also beispielsweise ein Stein oder ein Stöckchen zwischen Schutzblech und Reifenlauffläche ansammelt oder zwischen die Speichen eintritt, so droht eine Blockade des Rades mit gefährlichen Verletzungen für den Radfahrer. Um diese Folgen zu mildern oder ganz abzuwenden, ist die zweite Kraftschwelle so gewählt, daß sich beim Auftritt einer diese Kraftschwelle übersteigenden Auslösekraft die Befestigungseinrichtung selbsttätig öffnet, indem sich das Schutzblech 1 in radialer Richtung von der Reifenlauffläche entfernt. Die Drahtstrebe 2 verändert also ihre Lage an der Federkralle 7, wobei es durchaus vorkommen kann oder beabsichtigt ist, daß die Drahtstrebe 2 auch ganz aus der Befestigungseinrichtung heraustritt. Damit ist die Möglichkeit gegeben, daß der Fremdkörper nicht eingeklemmt, sondern freigegeben wird, wodurch der drohende Unfall entweder ganz vermieden oder mindestens in seinen nachteiligen Folgen abgeschwächt wird. Danach kann das Schutzblech 1 mit Hilfe der Befestigungseinrichtung wieder leicht montiert und justiert werden, wie dies anhand der Erstjustage bereits beschrieben wurde.

Die Ausbildungsform der Befestigungsvorrichtung gemäß den Figuren 1-4 besitzt den Vorteil, daß die Federkralle 7 zwei Schenkel 12 und 13 in symmetrischer Anordnung aufweist, so daß die Reibkräfte der beiden Reibschwellen unabhängig von der Verschieberichtung der Drahtstrebe 2 relativ zur Befestigungseinrichtung ist. Es ist verständlich, daß die Befestigungsvorrichtung auch mit nur einem Schenkel 12 ausgebildet sein könnte. Um die grundsätzliche Wirkungsweise der Befestigungseinrichtung aufzuzeigen, ist in Figur 5 eine Prinzipskizze dargestellt. Die Befestigungsbrücke 5 ist an zwei Punkten mit dem Schutzblech 1 vernietet. Die Befestigungsbrücke 5 besitzt die beiden Ohren 6 pro Fahrzeugseite, wobei die angesetzte Befestigungseinrichtung hier nur auf der linken Seite dargestellt ist. Es versteht sich, daß die gleiche Ausbildung auch auf der rechten Seite realisiert wird. Von dem Ohr 6 erstrecken sich Arme 30 mit Durchbrechungen 31 etwa rechtwinklig zur Radebene 4, wobei die Drahtstrebe 2 die Durchbrechungen 21 durchsetzt. Es ist ein Reibklotz 32 vorgesehen, der mit Hilfe einer Feder 33 gegen die Drahtstrebe 2 angedrückt wird, so daß hier und an den Durchbrechungen 31 der Reibschluß entsteht. Damit wird eine Kraftschwelle festgelegt, die beim Verschieben der Drahtstrebe 2 in den Durchbrechungen 31 überwunden werden muß. Es ist hier eine einzige Kraftschwelle vorgesehen, die konstruktiv so gewählt ist, daß sie sowohl die Justage als auch das selbsttätige Öffnen bei drohender Blockade des Rades ermöglicht. Grundsätzlich kann auch hier durch ein Stellglied die Vorspannung der Feder 33 z. B. wahlweise zwischen zwei Stufen hin und her verstellt werden, wenn zwei unterschiedliche definierte Kraftschwellen gewünscht werden.

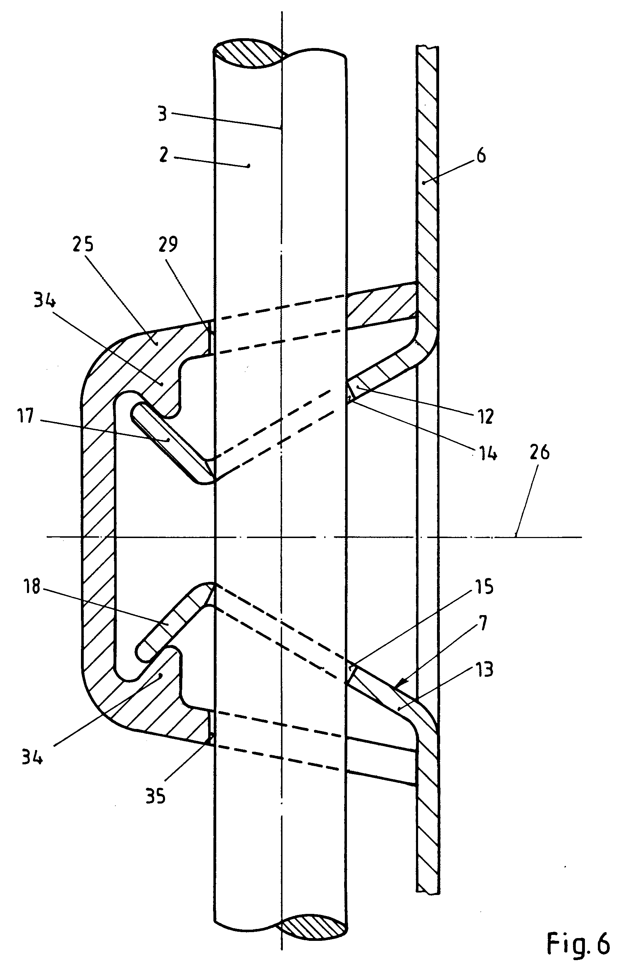

Figur 6 zeigt wiederum eine mehr konstruktive Ausführungsform. Die Federkralle 7 ist einstückig mit dem Ohr 6 bzw. der Befestigungsbrücke 5 ausgebildet, in dem die Schenkel 12 und 13 aus diesem Material herausgebogen sind. Es ist hier eine Abdeckkappe 25 vorgesehen, die zugleich die Funktion des Stellgliedes mit übernimmt. Hierzu weist die Abdeckkappe 25 Nocken 34 auf, mit denen die Abdeckkappe 25 nach Art einer Rast-Schnappverbindung auf die nach außen abgewinkelten Fortsätze 17 und 18 der Schenkel 12 und 13 aufgesetzt wird, wenn nach der Justage die zweite höhere Kraftschwelle festgelegt werden soll. Die Abdeckkappe 25 ist mit Hilfe der Durchbrechung 29 unverlierbar an der Drahtstrebe 2 vorgesehen. Sie besitzt eine randoffene Durchbrechung 35, so daß sie sich einseitig zur Ebene 26 abschwenken läßt. Zum Einfädeln der Drahtstrebe 2 in die Schenkel 12 und 13 werden diese relativ zur Ebene 26 etwas auseinandergebogen. Nach dem Loslassen wird die erste Kraftschwelle erreicht. Das Aufklipsen der Abdeckkappe 25 führt zum Erreichen der zweiten Kraftschwelle.

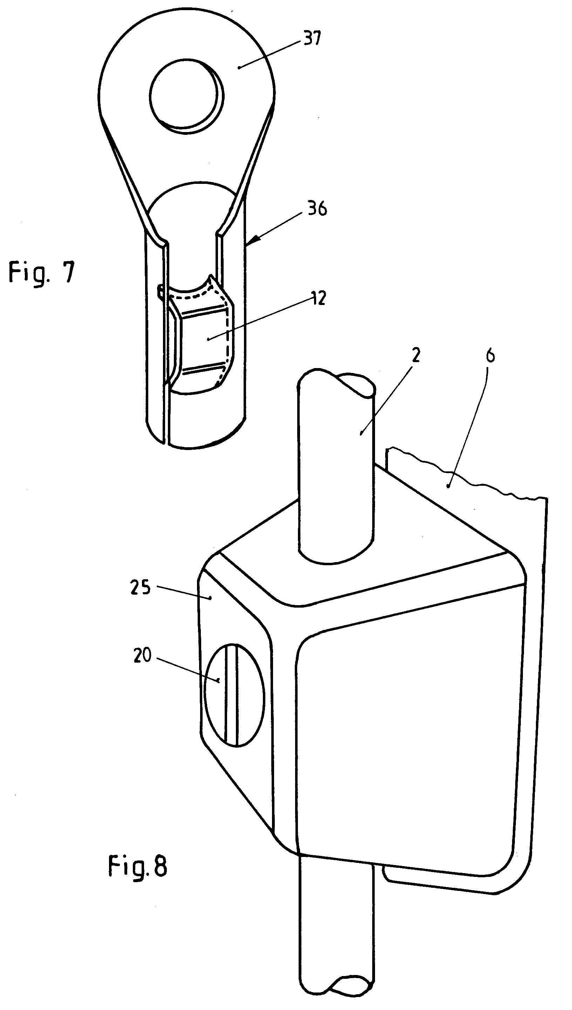

Figur 7 zeigt eine weitere Ausführungsform der Befestigungseinrichtung, bei der gleichsam nur ein Schenkel 12 vorgesehen ist. Der Schenkel 12 ist Bestandteil eines Befestigungskörpers 36, der hülsenartig ausgebildet ist und in seinem Inneren zur Aufnahme der nicht dargestellten Drahtstrebe bestimmt ist. Der Schenkel 12 liegt federnd an einem Teil der Oberfläche der Drahtstrebe an und realisiert damit eine einzige Kraftschwelle. Der Befestigungskörper 36 besitzt ein Auge 37, mit dessen Hilfe er mit einem Ohr 6 einer Befestigungsbrücke 5 verbunden, beispielsweise vernietet werden kann.

Es ist erkennbar, daß die Befestigungsvorrichtung in erster Linie schutzblechseitig Anwendung findet. Sie läßt sich aber auch gabelseitig oder auch im Zwischenbereich anwenden.

### BEZUGSZEICHENLISTE

- 1: Schutzblech
- 2: Drahtstrebe
- 3: Achse
- 4: Radebene
- 5: Befestigungsbrücke
- 6: Ohr
- 7: Federkralle
- 8: Niet
- 9: Ausnehmung
- 10: Ausnehmung
- 11: Boden
- 12: Schenkel
- 13: Schenkel
- 14: Durchbrechung
- 15: Durchbrechung
- 16: Schrägwinkel
- 17: Fortsatz
- 18: Fortsatz
- 19: Spalt
- 20: Stellglied
- 21: Bund
- 2: 2 Vierkant
- 23: Kopf
- 24: Schlitz
- 25: Abdeckkappe
- 26: Ebene
- 27: Ausnehmung
- 28: Vorsprung
- 29: Durchbrechung
- 30: Arm
- 31: Durchbrechung
- 32: Reibklotz
- 33: Feder
- 34: Nocken
- 35: Durchbrechung
- 36: Befestigungskörper
- 37: Auge

## Patentansprüche

1. Befestigungsvorrichtung für ein Schutzblech, insbesondere an einem Fahrrad, mit mindestens einer zum Schutzblech führenden Drahtstrebe pro Fahrradseite und einer schutzblechseitig oder gabelseitig vorgesehenen Klemmeinrichtung, die die Drahtstrebe nur reibschlüssig festlegt, dadurch gekennzeichnet, daß die Klemmeinrichtung federnd-nachgiebig ausgebildet ist oder mindestens ein federnd-nachgiebiges Teil aufweist, durch deren oder dessen Federkraft eine definierte Kraftschwelle des Reibschlusses zwischen Klemmeinrichtung und Drahtstrebe festgelegt ist, die die Justage während des Montagevorgangs und das selbsttätige Öffnen der reibschlüssigen Verbindung bei drohender Blockade des Rades ermöglicht.

2. Befestigungsvorrichtung nach Anspruch 1, dadurch gekennzeichnet, daß die Klemmeinrichtung zwei unterschiedliche definierte Kraftschwellen aufweist, von denen die niedrigere der Justage und die höhere dem selbsttätigen Öffnen zugeordnet ist.

3. Befestigungsvorrichtung nach Anspruch 1 oder 2, dadurch gekennzeichnet, daß die Klemmeinrichtung einen schräg zur Achse der Drahtstrebe verlaufenden federnden Schenkel aufweist, der eine Durchbrechung besitzt, durch die sich die Drahtstrebe erstreckt.

4. Befestigungsvorrichtung nach Anspruch 1 oder 2, dadurch gekennzeichnet, daß die Klemmeinrichtung zwei schräg zur Achse der Drahtstrebe verlaufende federnde Schenkel aufweist, die symmetrisch zu einer senkrecht auf der Achse der Drahtstrebe stehenden Ebene angeordnet sind und je eine Durchbrechung besitzen, durch die sich die Drahtstrebe erstreckt.

5. Befestigungsvorrichtung nach Anspruch 3 oder 4, dadurch gekennzeichnet, daß ein Stellgied zum wahlweisen Einstellen der einen oder der anderen Kraftschwelle vorgesehen ist.

6. Befestigungsvorrichtung nach Anspruch 5, dadurch gekennzeichnet, daß die federnden Schenkel an ihren freien Enden Fortsätze aufweisen, an denen das Stellglied angreift.

7. Befestigungsvorrichtung nach Anspruch 5 oder 6, dadurch gekennzeichnet, daß das Stellgied zugleich als Abdeckkappe für die Schenkel der Klemmeinrichtung ausgebildet ist.

8. Befestigungsvorrichtung nach Anspruch 7, dadurch gekennzeichnet, daß das als Abdeckkappe ausgebildete Stellglied mit mindestens einer randgeschlossenen Ausnehmung versehen ist, durch die sich die Drahtstrebe erstreckt.

9. Befestigungsvorrichtung nach Anspruch 7 oder 8, dadurch gekennzeichnet, daß die Abdeckkappe auch das freie Ende der Drahtstrebe umschließt.

10. Befestigungsvorrichtung nach einem der Ansprüche 1 bis 9, dadurch gekennzeichnet, daß die Klemmeinrichtung schutzblechseitig, gabelseitig oder bei geteilter Drahtstrebe zwischen diesen beiden Stellen angeordnet ist.
